# EUROPÄISCHE PATENTSCHRIFT

(11) **EP 0 666 209 B1**
(45) Veröffentlichungstag und Bekanntmachung des Hinweises auf die Patenterteilung: **19.11.1997**
(21) Anmeldenummer: 95101094.1
(22) Anmeldetag: 27.01.1995
(51) Int. Cl.: B62B 5/04, G05G 7/04

(54) **Transportwagen, insbesondere Rollbehälter, mit einziehbaren Stützbeinen**
Transport trolley, especially roll container comprising retractable supporting feet
Chariot de transport, en particulier conteneur roulant comportant des pieds de support retractables

(30) Priorität: 05.02.1994 DE 4403658
(43) Veröffentlichungstag der Anmeldung: 09.08.1995
(73) Patentinhaber: MCE Marketing-Consulting-Engineering GmbH, D-44536 Lünen (DE); Deutsche Post AG, 53175 Bonn-Bad Godesberg (DE)
(72) Erfinder: Feser, Robert, D-45899 Gelsenkirchen (DE)
(74) Vertreter: Cohausz & Florack

(56) Entgegenhaltungen:
- DE-B- 1 235 153
- US-A- 1 540 247
- US-A- 1 921 693
- US-A- 4 073 369
- US-A- 4 907 468

## Beschreibung

Die Erfindung betrifft einen Transportwagen, insbesondere Rollbehälter, aus einem mit insbesondere lenkbaren Rollen bestückten und eine Feststellvorrichtung aufweisenden Unterbau und einem Aufbau, wobei die Feststellvorrichtung zwei über ein Hebelgetriebe ausfahrbare, den Transportwagen vom Boden abhebende Stützen umfaßt, wobei das Hebelgetriebe einen Kraftspeicher umfaßt, der beim Verschwenken des Handhebels aus der Ruhelage für die eingefahrene Stütze in die Betriebsstellung aufladbar ist.

Solche Transportwagen dienen z.B. zum Transport von Stückgut, wie Paketen und Briefen. Sie werden sowohl bei der Bahn als auch bei der Post als auch auf Flughäfen eingesetzt. Über eine Deichsel und Kupplung können mehrere Behälter zu einem Zug zusammengestellt und von einer Zugmaschine bewegt werden.

Als Rollbehälter ausgebildete Transportwagen sind in verschiedenen Ausführungen bekannt (DE 41 18 676 A17, DE-GM 90 05 179). Bei solchen in der Praxis eingesetzten Rollbehältern besteht der Unterbau aus einer hochklappbaren Bodenplatte und vier Lenkrollen und der Aufbau aus einer vorderen und einer hinteren Stirnwand und einer Seitenwand. Eine Stirnwand ist auf die Seitenwand zu faltbar. Wegen der hochklappbaren Bodenplatte und der faltbaren Stirnwand lassen sich mehrere Rollbehälter ineinanderschieben und raumsparend abstellen.

Von solchen Rollbehältern wird gefordert, daß sie beim Beladen und Entladen absolut feststehen. Mit auf die in der Regel als Lenkrollen ausgebildeten Rollen einwirkenden Bremsen läßt sich diese Standfestigkeit nicht erreichen. Dagegen läßt sich die geforderte Standfestigkeit mit ausfahrbaren Stützen erreichen, die mittels eines an der Seitenwand angeordneten, auf ein Hebelgetriebe einwirkenden Handhebels ausfahrbar sind. Durch diese Stützen wird der Rollbehälter einseitig ein wenig vom Boden abgehoben. Der Hubweg der Stützen muß vergleichsweise groß sein, damit im Fahrbetrieb der Rollbehälter mit den Stützen nicht an Unebenheiten oder Vorsprüngen des Bodens hängen bleibt. Diese Art der Feststellvorrichtung hat sich in der Praxis bewährt.

Da ein in der Praxis eingesetzter beladener Rollbehälter ein Gesamtgewicht von mehreren hundert Kilogramm haben kann, bedarf es einer erheblichen Kraft an den Handhebeln, um den Rollbehälter auf die beiden Stützen aufzubocken. In der Praxis hat man versucht, durch eine hohe Übersetzung mit einem großen Schwenkweg die von der Bedienungsperson aufzuwendende Kraft auf ein erträgliches Maß zu reduzieren. Nach wie vor ist aber eine erhebliche Kraft notwendig. Dies gilt insbesondere dann, wenn der zur Verfügung stehende Schwenkweg nicht allzu groß ist.

Bei einem bekannten Transportwagen der eingangs genannten Art (DE-GM 18 22 479) besteht der Kraftspeicher aus Schraubenfedern, die als Rückholfedern auf die Stützen einwirken. Sobald das einen Exzenter aufweisende Hebelgetriebe absenkend auf die Stützen einwirkt, werden die schon in der oberen Ruhestellung der Stützen gespannten Federn weiter gespannt. Dieser Spannvorgang der Federn und damit auch der Ladevorgang des Kraftspeichers dauert weiter an, wenn die Stützen auf dem Boden aufsetzen. Das bedeutet, daß die Bedienungsperson beim Verschwenken des Hebels nicht nur die Last des Transportwagens zum Aufbocken, sondern auch noch die Belastung der Federn aufbringen muß.

Der Erfindung liegt die Aufgabe zugrunde, einen Transportwagen, insbesondere Rollbehälter, der eingangs genannten Art zu schaffen, bei dem die von der Bedienungsperson für die Betätigung der Feststellvorrichtung aufzuwendende Kraft im Vergleich zu Rollbehältern des Standes der Technik vermindert ist.

Diese Aufgabe wird dadurch gelöst, daß der Aufladevorgang des Kraftspeichers höchstens bis zum Aufsetzen der Stütze auf dem Boden erfolgt und daß nach dem Aufsetzen der Stütze auf dem Boden der Kraftspeicher in das Hebelgetriebe zur Unterstützung der Hubkraft des Hebelgetriebes entladen wird.

Bei der Erfindung wird der für einen störungsfreien Fahrbetrieb des Transportwagens notwendige Freiraum der Stützen in ihrer Ruhelage ausgenutzt, um bei Leerhub den Kraftspeicher zu laden. Die dafür notwendige Kraft ist also vergleichsweise klein. Genau diese gespeicherte Kraft wird beim Aufbocken des Transportwagens durch Entladen des Kraftspeichers genutzt, um die von der Bedienungsperson aufzuwendende Kraft zu unterstützen. Im Ergebnis wird dadurch zwar nicht die zu leistende Arbeit vermindert, wohl aber die für das Aufbocken notwendige Kraft, weshalb die Bedienungsperson den Behälter leichter als bisher anheben kann.

Nach einer weiteren Ausgestaltung der Erfindung ist der Kraftspeicher als Feder ausgebildet. Vorzugsweise ist der Kraftspeicher verschwenkbar auf dem Fahrgestell gelagert und verschwenkbar am Hebelgetriebe gekuppelt, derart, daß er beim Verschwenken über eine neutrale Lage, in der die gespeicherte Kraft ihr Maximum erreicht, hinwegbewegt wird. Die Einstellung sollte derart sein, daß die neutrale Lage beim Aufsetzen der Stützen gerade erreicht ist.

Nach einer weiteren Ausgestaltung der Erfindung ist das Hebelgetriebe derart ausgestaltet, daß in jeder Stütze ein Hebelarm eines Kniegelenks mit einem Ende angreift, dessen anderer Hebelarm mit einem Ende am Unterbau abgestützt ist und dessen Kniegelenk an einem der Handhebel gekuppelt ist.

Um in der ausgefahrenen Stellung der Stützen diese auf einfache Art und Weise sicher zu fixieren, kann das Kniegelenk aus seiner Ruhestellung für die eingefahrene Stütze über seine gestreckte Lage hinaus in seine Betriebsstellung für die ausgefahrene Stütze bis an einem Anschlag verschwenkbar sein.

Bei dem beschriebenen Rollbehälter nach dem Stand der Technik ist das Hebelgetriebe an einer Seitenwand angeordnet. Es weist einen einzigen langen Hebelarm auf, der praktisch über die gesamte Breite der Seitenwand verschwenkt werden muß. Auf diese Art und Weise läßt sich eine gute Kraftübersetzung erreichen, so daß die für das Aufbocken aufzuwendende Kraft sich in erträglichen Grenzen hält. Nachteilig ist aber, daß bei einem ungünstigen Aufstellungsort des Rollbehälters, z.B. vor einer Wand oder in einer Ecke, der Handhebel in der einen oder anderen Schwenkstellung von einer Stirnseite aus schwer zu erreichen ist. Hier schafft die Erfindung mit einer weiteren Ausgestaltung Abhilfe. Diese Ausgestaltung besteht darin, daß das Hebelgetriebe zwei zur gemeinsamen Verschwenkung aus der Mittellage an einer Seite in entgegengesetztem Sinne zu den beiden Stirnseiten hin miteinander gekoppelte Handhebel aufweist.

Bei dieser Ausgestaltung der Erfindung ist die Feststellvorrichtung von beiden Stirnseiten aus unter gleichen Bedingungen zu bedienen. Wenn von einer Stirnseite aus der eine Handhebel zur Arretierung des Transportwagens, inbesondere des Rollbehälters verschwenkt wird und anschließend diese Seite durch einen anderen Transportwagen zugestellt wird, kann die Feststellvorrichtung von der anderen freien Stirnseite aus bedient werden.

Die gegensinnige gemeinsame Verschwenkung der beiden Handhebel läßt sich auf einfache Art und Weise dadurch verwirklichen, daß die beiden Handhebel als zweiarmige Hebel ausgebildet sind, die über einen Querriegel auf verschiedenen Seiten der Gelenke der Handhebel angelenkt sind.

Im folgenden wird die Erfindung anhand einer ein Ausführungsbeispiel darstellenden Zeichnung näher erläutert. Im einzelnen zeigen:
- Fig. 1: einen Rollbehälter in Seitenansicht,
- Fig. 2: den Rollbehälter gemäß Fig. 1 in Seitenansicht von der zu Fig. 1 anderen Seite,
- Fig. 3: den Rollbehälter gemäß Fig. 1 in Aufsicht,
- Fig. 4: den Rollbehälter gemäß Fig. 2 mit im Detail dargestellter Feststellvorrichtung und
- Fig.5a-c: ein Detail der Feststellvorrichtung der Fig. 4 in verschiedenen Stellungen.

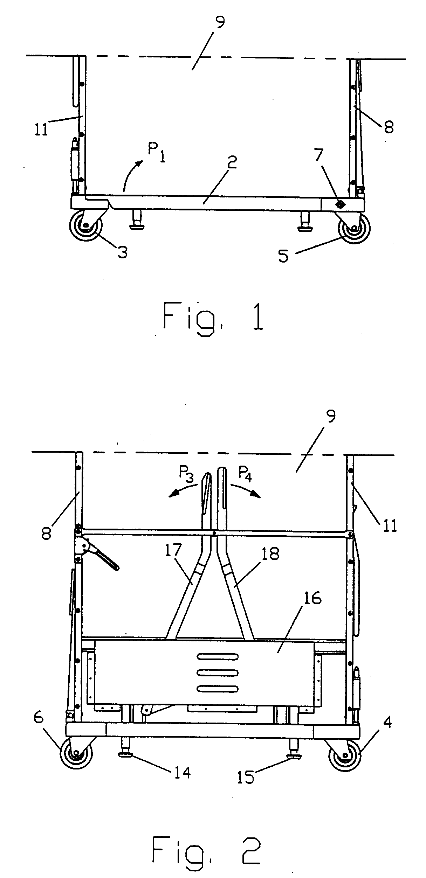

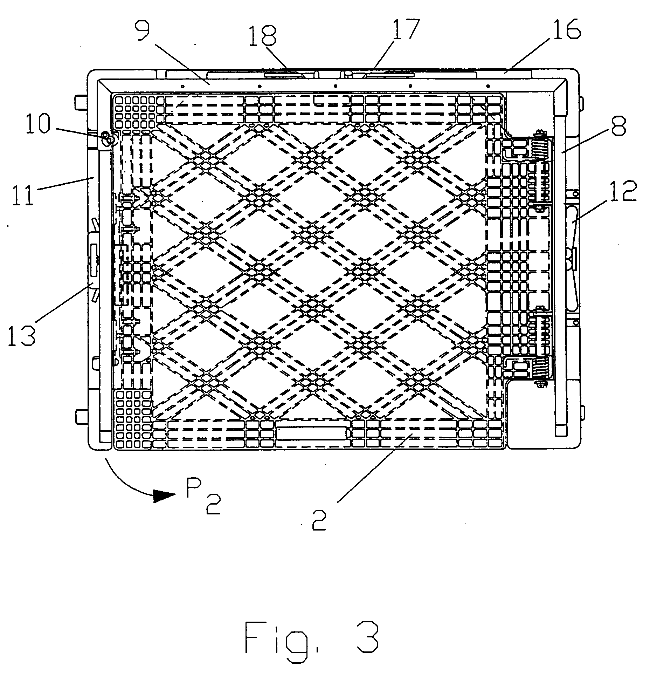

Der in den Figuren 1 bis 3 nur schematisch dargestellte, als Rollbehälter ausgebildete Transportwagen weist einen Unterbau mit einem Rahmen 1 und einer Bodenplatte 2 auf. Am Rahmen 1 sind vorne und hinten je zwei Rollen 3 bis 6, von denen mindestens die vorderen lenkbar sind, befestigt. Der eigentliche Behälter besteht aus der in Pfeilrichtung P1 hochklappbaren, um ein Gelenk 7 hochschwenkbaren Bodenplatte 2 und einem Aufbau aus einer rückseitigen Stirnwand 8, einer damit winkelsteif verbundenen Seitenwand 9 und einer an der Seitenwand 9 um ein Gelenk 10 in Pfeilrichtung P2 einfaltbaren vorderseitigen Stirnwand 11. An der rückseitigen Stirnwand 8 ist eine Deichsel 12 und an der vorderseitigen Stirnwand 11 eine Kupplung 13 befestigt, so daß der Rollbehälter mit anderen gleichartigen Rollbehältern zu einem Zug zusammengestellt werden kann.

Am unteren Rand des Rahmens 1 an der Seitenwand 9 sind ausfahrbare Stützen 14, 15 vorgesehen, die über ein hinter einer Schutzverkleidung 16 angeordnetes Hebelgetriebe mittels Handhebel 17, 18 betätigt werden können. Durch Ausfahren der sich am Boden abstützenden Stützen 14, 15 kann der Rollbehälter aufgebockt werden, so daß seine Rollen 4, 6 leicht vom Boden abheben. Auf diese Art und Weise ist der Rollbehälter auf dem Boden unverrückbar fixiert.

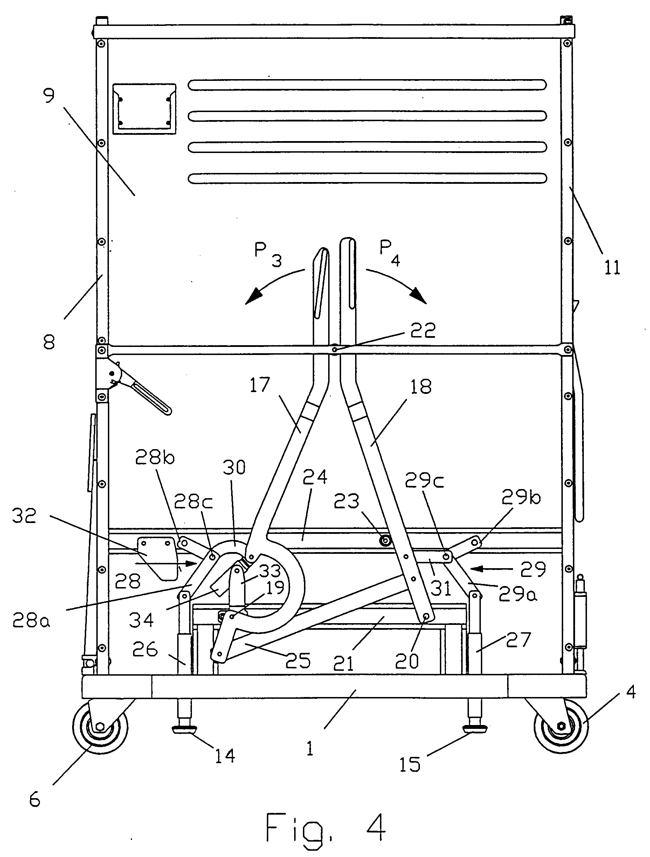

Die Handhebel 17, 18 sind um Schwenklager 19, 20 eines vom Rahmen 1 getragenen ersten Querholms 21 in entgegengesetztem Sinn entsprechend Pfeilen P3, P4 verschwenkbar. Ihre in Fig. 2 und 4 dargestellte Ruhelage in der Mitte der Seitenwand 9 wird durch Anschlagbolzen 22, 23 an einem vom Rahmen 1 getragenen zweiten Querholm 24 bestimmt. Beide Handhebel 17, 18 sind miteinander über einen Querriegel 25 verbunden, der an verschiedenen Seiten der Schwenklager 19, 20 angelenkt ist.

Die Stützen 14, 15 sind in vom Rahmen 1 getragenen Hülsen 26, 27 verschiebbar gelagert. Für das Ein- und Ausfahren der Stützen 14, 15 ist jeweils ein Kniehebel 28, 29 vorgesehen, dessen einer Hebelarm 28a, 29a mit einem Ende an der Stütze 14, 15 und deren anderer Hebelarm 28b, 29b mit einem Ende an einem festen Lagerpunkt des zweiten Querholms 24 angelenkt ist. Das Kniegelenk 28c, 29c ist über einen Schubriegel 30, 31 mit dem Handhebel 17, 18 gelenkig verbunden. Die Handhebel 17, 18 können in Pfeilrichtung P3, P4 verschwenkt werden, wobei die Kniehebel 28, 29 ihre gestreckte Lage überschreiten und das Kniegelenk 28 an einem Anschlag 32 des zweiten Querholms 24 anschlägt. Bei dieser Verschwenkbewegung setzen die Stützen 14, 15 vor Erreichen der gestreckten Lage auf und heben den Rollbehälter mit seinen Gelenkrollen 4, 6 ein wenig vom Boden ab. Da sich die Kniehebel 28, 29 dann jenseits der gestreckten Lage befinden und durch den Anschlag 32 in dieser Position fixiert sind, sind die Stützen 14, 15 arretiert und lassen sich nur durch Betätigen der Hebel 17, 18 unter Kraftaufwendung bis über die gestreckte Lage der Kniehebel 28, 29 wieder lösen.

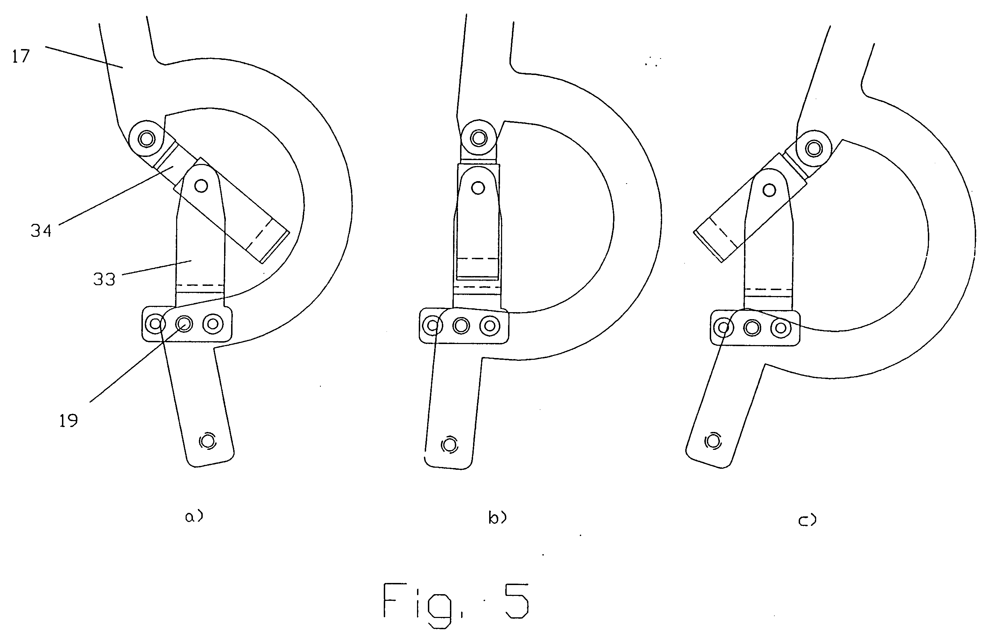

An dem Querholm 21 ist ein Lagerbock 33 für einen darauf verschwenkbar gelagerten Kraftspeicher 34 gelagert, dessen bewegliches Teil am Handhebel 17 angelenkt ist. Durch Verschwenken des Handhebels 17 in Pfeilrichtung P3 wird der Kraftspeicher 34 geladen, d.h. eine Feder gespannt, bis zu einem oberen Scheitelpunkt (Fig.5c nach Fig.5b. Diese Schwenkbewegung sollte höchstens dem Leerhub der Stützen 14, 15 bis zum Aufsetzen auf den Boden entsprechen. Deshalb braucht in diesem Schwenkbereich die Bedienungsperson nur die Kraft zum Laden des Kraftspeichers 34 aufzuwenden. Beim weiteren Verschwenken (Fig.5b nach Fig.5a), wenn mit den Stützen, 14, 15 der Rollbehälter vom Boden abgehoben wird, wird der Kraftspeicher 34 entladen und unterstützt die Schwenkbewegung, so daß die von der Bedienungsperson für das Anheben des Rollbehälters aufzubringende Kraft geringer ist als bei fehlendem Kraftspeicher 34. Umgekehrt wird beim Zurückschwenken der Kraftspeicher 34 durch die vom Gewicht des Behälters beim Absenken auf die Kniegelenke 28, 29 ausgeübte Kraft geladen, so daß die Bedienungsperson auch in dieser Phase der Betätigung der Feststellvorrichtung weniger Kraft als bei fehlendem Kraftspeicher 34 braucht.

## Patentansprüche

1. Transportwagen, insbesondere Rollbehälter, aus einem mit insbesondere lenkbaren Rollen (3-6) bestückten und eine Feststellvorrichtung (14-34) aufweisenden Unterbau und einem Aufbau (2,8,9,11), wobei die Feststellvorrichtung (14-34) ausfahrbare, über ein Hebelgetriebe (17-32) den Transportwagen vom Boden abhebende Stützen (14,15) umfaßt, wobei das Hebelgetriebe (17-32) einen Kraftspeicher (34) umfaßt, der beim Verschwenken des Handhebels (17,18) aus der Ruhelage für die eingefahrene Stütze (14,15) in die Betriebsstellung aufladbar ist,
**dadurch gekennzeichnet,** daß der Aufladevorgang des Kraftspeichers (34) höchstens bis zum Aufsetzen der Stütze (14,15) auf dem Boden erfolgt und daß nach dem Aufsetzen der Stütze (14,15) auf dem Boden der Kraftspeicher (34) in das Hebelgetriebe (17-32) zur Unterstützung der Hubkraft des Hebelgetriebes (17-32) entladen wird.

2. Transportwagen nach Anspruch 1, **dadurch gekennzeichnet,** daß der Kraftspeicher (34) eine Feder ist.

3. Transportwagen nach Anspruch 1 oder 2, **dadurch gekennzeichnet,** daß der Kraftspeicher (34) verschwenkbar auf dem Unterbau gelagert und verschwenkbar am Handhebel (17, 18) gekuppelt ist, derart, daß er beim Verschwenken über eine neutrale Lage, in der die gespeicherte Kraft ihr Maximum erreicht, hinwegbewegt wird.

4. Transportwagen nach einem der Ansprüche 1 bis 3, **dadurch gekennzeichnet,** daß an jeder Stütze (14, 15) ein Hebelarm (28a, 29a) eines Kniegelenks (28, 29) mit einem Ende angreift, dessen anderer Hebelarm (28b, 29b) mit einem Ende an einem festen Lagerpunkt des Rollbehälters abgestützt ist und dessen Kniegelenk (28c, 29c) an einem der Handhebel (17, 18) gekuppelt ist.

5. Transportwagen nach Anspruch 4, **dadurch gekennzeichnet,** daß das Kniegelenk (28c, 29c) aus seiner Ruhestellung für die eingefahrene Stütze (14, 15) über seine gestreckte Lage hinaus in eine Betriebsstellung für die ausgefahrene Stütze (14, 15) bis an einen Anschlag (32) verschwenkbar ist.

6. Transportwagen nach einem der Ansprüche 1 bis 4, **dadurch gekennzeichnet,** daß das Hebelgetriebe (17-32) zwei zur gemeinsamen Verschwenkung aus der Mittellage an einer Seite (9) des Transportwagens in entgegengesetztem Sinne (P3, P4) zu dessen beiden Stirnseiten (8, 11) miteinander gekuppelte Handhebel (17, 18) aufweist.

7. Transportwagen nach Anspruch 6, **dadurch gekennzeichnet,** daß die beiden Handhebel (17, 18) als zweiarmige Hebel ausgebildet sind, die über einen Querriegel (25) auf verschiedenen Seiten der Gelenke (19, 20) der Handhebel (17, 18) angelenkt sind.

## Claims

1. A conveying trolley, more particularly a rolling container, comprising a superstructure (2, 8, 9, 11) and a base structure equipped with more particularly steerable castors (3-6) and having a parking device (14-34), the parking device (14-34) comprising extrudable supports (14, 15) which lift the conveying trolley from the ground via a lever transmission (17-32), the lever transmission (17-32) comprising a force accumulator (34) which can be charged during the pivoting of the hand lever (17, 18) out of the inoperative position for the retracted support (14, 15) into the operational position, characterized in that the charging operation of the force accumulator (34) takes place at most until the support (14, 15) has been placed on the ground, and after the support (14, 15) has been placed on the ground the force accumulator (34) is discharged into the lever transmission (17-32) to boost the lifting force of the lever transmission (17-32).

2. A conveying trolley according to claim 1, characterized in that the force accumulator (34) is a spring.

3. A conveying trolley according to claims 1 or 2, characterized in that the force accumulator (34) is so mounted pivotably on the base structure and coupled pivotably to the hand lever (17, 18) that during pivoting it is moved beyond a neutral position in which the accumulated force reaches its maximum.

4. A conveying trolley according to one of claims 1 to 3, characterized in that a lever arm (28a, 29a) of a toggle joint (28, 29) engages by one end with each support (14, 15), its other lever arm (28b, 29b) bearing via one end against a fixed bearing point of the rolling container and its toggle joint (28c, 29c) being coupled to one of the hand levers (17, 18).

5. A conveying trolley according to claim 4, characterized in that the toggle joint (28c, 29c) can be pivoted out of its inoperative position for the retracted support (14, 15) beyond its extended position into an operational position for the extruded support (14, 15) as far as a stop (32).

6. A conveying trolley according to one of claims 1 to 4, characterized in that the lever transmission (17-32) has two intercoupled hand levers (17, 18) for joint pivoting out of the central position on one side (9) of the conveying trolley in the opposite sense (P3, P4) in the direction of its two end faces (8, 11).

7. A conveying trolley according to claim 6, characterized in that the two hand levers (17, 18) take the form of two-armed levers which are articulated via a cross member (25) on different sides of the joints (19, 20) of the hand levers (17, 18).

## Revendications

1. Chariot de transport, notamment conteneur à roulettes, constitué d'un châssis, équipé de roulettes (3-6), notamment orientables, et comportant un dispositif d'immobilisation (14-34), et d'une carrosserie (2, 8, 9, 11), le dispositif d'immobilisation (14-34) comprenant des béquilles (14, 15) déployables et soulevant du sol le chariot de transport par l'intermédiaire d'un mécanisme à levier (17-32), le mécanisme à levier (17-32) comportant un accumulateur de force (34) qui peut faire l'objet d'une mise en charge lors du basculement du levier manuel (17, 18) de la position de repos, correspondant au béquilles (14, 15) rétractées, à la position de service,
caractérisé en ce que l'opération de mise en charge de l'accumulateur de force (34) s'effectue au maximum jusqu'à l'appui des béquilles (14, 15) sur le sol et en ce qu'une fois les béquilles (14, 15) en appui sur le sole, l'accumulateur de force (34) situées dans le mécanisme à levier (17-32) fait l'objet d'un déchargement de force dans le mécanisme à levier (17-32) pour assister la force de poussée du mécanisme à levier (17-32).

2. Chariot de transport suivant la revendication 1, caractérisé en ce que l'accumulateur de force (34) est un ressort.

3. Chariot de transport suivant la revendication 1 ou 2, caractérisé en ce que l'accumulateur de force (34) est monté d'une manière basculante sur le châssis et est accouplé d'une manière basculante au levier manuel (17, 18), d'une façon telle que, lors du basculement, il est déplacé en passant par une position neutre dans laquelle la force accumulée atteint son maximum.

4. Chariot de transport suivant l'une des revendications 1 à 3, caractérisé en ce que, pour chaque béquille (14, 15), un bras de levier (28a, 29a) d'une articulation à genouillère (28, 29) attaque par une extrémité cette béquille (14, 15), l'autre bras de levier (28b, 29b) de l'articulation à genouillère (28, 29) prenant appui par une extrémité sur un point fixe de montage du conteneur à roulettes et l'articulation (28c, 29c) de la genouillère étant accouplée à l'un des leviers manuels (17, 18).

5. Chariot de transport suivant la revendication 4, caractérisé en ce que l'articulation (28c, 29c) de la genouillère peut basculer de sa position de repos, correspondant à la béquille (14, 15) rétractée, en passant par sa position d'alignement, à une position de service correspondant à la béquille (14, 15) déployée, jusque sur une butée (32).

6. Chariot de transport suivant l'une des revendications 1 à 4, caractérisé en ce que le mécanisme à levier (17-32) comprend deux leviers manuels (17, 18) accouplés entre eux en vue du basculement commun, de la position centrale sur un côté (9) du chariot de transport, dans des sens opposés (P3, P4), vers les deux faces frontales (8, 11) du chariot.

7. Chariot de transport suivant la revendication 6, caractérisé en ce que les deux leviers manuels (17, 18) sont réalisés sous forme de leviers à deux bras qui sont articulés au moyen d'une bielle transversale(25) sur différents côtés des articulations (19, 20) des leviers manuels (17, 18).
